(19) Europäisches Patentamt
European Patent Office
Office européen des brevets

(11) **EP 3 926 146 B1**

(12) **FASCICULE DE BREVET EUROPEEN**

(45) Date de publication et mention de la délivrance du brevet:
**05.07.2023 Bulletin 2023/27**

(21) Numéro de dépôt: **21167959.2**

(22) Date de dépôt: **13.04.2021**

(51) Classification Internationale des Brevets (IPC):
**F01D 21/02** *(2006.01)*

(52) Classification Coopérative des Brevets (CPC):
**F01D 21/02; F02C 9/46;** F05D 2220/329;
F05D 2260/90; F05D 2270/021; F05D 2270/09;
F05D 2270/304; F05D 2270/335

(54) **PROCÉDÉ POUR ARRÊTER UN MOTEUR EN SURVITESSE, SYSTÈME ET GIRAVION ASSOCIÉS**

VERFAHREN ZUM ANHALTEN EINES MOTORS BEI ÜBERDREHEN, ENTSPRECHENDES SYSTEM UND DREHFLÜGELFLUGZEUG

METHOD FOR STOPPING AN ENGINE IN OVERSPEED, ASSOCIATED SYSTEM AND ROTORCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.06.2020 FR 2006318**

(43) Date de publication de la demande:
**22.12.2021 Bulletin 2021/51**

(73) Titulaire: **Airbus Helicopters**
**13725 Marignane Cedex (FR)**

(72) Inventeurs:
• **DUMUR, Guillaume**
**13300 SALON DE PROVENCE (FR)**
• **GAULMIN, François-Xavier**
**13300 SALON DE PROVENCE (FR)**

(74) Mandataire: **GPI Brevets**
**1330, rue Guillibert de la Lauzière**
**EuroParc de Pichaury**
**Bât B2**
**13856 Aix en Provence Cedex 3 (FR)**

(56) Documents cités:
**EP-A1- 3 000 986    EP-A1- 3 075 662**
**JP-A- 2004 011 459    US-B1- 6 321 525**

**Description**

La présente invention concerne un procédé pour arrêter un moteur en survitesse, un tel système de sécurité en survitesse et un giravion muni de ce système de sécurité en survitesse.

L'invention se rapporte au domaine technique général des systèmes assurant la sécurité de fonctionnement des moteurs d'un aéronef, et notamment la sécurité de fonctionnement d'un turbomoteur d'un giravion.

La présente invention concerne plus particulièrement une protection d'une installation motrice en cas de survitesse d'un moteur.

Un giravion comporte en effet au moins un moteur pour mettre en rotation au moins un rotor. Un tel rotor assure au moins partiellement la sustentation de ce giravion, voire sa propulsion. Par exemple, un giravion bimoteur comporte un premier moteur et un deuxième moteur entraînant conjointement un rotor principal de sustentation et/ou de propulsion via une chaîne de transmission de puissance.

Le premier moteur et le deuxième moteur sont généralement contrôlés respectivement par une première unité de contrôle et une deuxième unité de contrôle. De telles unités de contrôle peuvent être comprises dans un système de régulation plus général désigné par l'expression « Full Authority Digital Engine Control » en langue anglaise ou plus simplement par son acronyme « FADEC ».

Chaque unité de contrôle peut comprendre un calculateur et des unités périphériques de commande et de contrôle s'interfaçant entre le cockpit et le moteur associé du giravion.

En outre, les moteurs d'un tel giravion peuvent être des turbomoteurs.

Un turbomoteur comporte classiquement un générateur de gaz. Le générateur de gaz comporte successivement au moins un compresseur, une chambre de combustion et au moins une turbine de détente, le compresseur étant lié mécaniquement à la turbine de détente par un arbre moteur.

De plus, le turbomoteur comporte un ensemble de puissance situé en aval du générateur de gaz. Cet ensemble de puissance est généralement muni d'au moins une turbine de puissance mise rotation par les gaz sortant du générateur de gaz. Cette turbine de puissance met en rotation un arbre de travail engrenant la chaîne de transmission de puissance qui est reliée au moins à un rotor de sustentation et/ou de propulsion.

La turbine de puissance est qualifiée de « libre » lorsque cette turbine n'est pas mécaniquement reliée par un arbre au générateur de gaz.

En cas de rupture de la chaîne de transmission de puissance ou de glissement d'une roue libre de cette chaîne de transmission notamment, la vitesse de rotation de la turbine de puissance d'un turbomoteur peut augmenter considérablement et de manière extrêmement rapide. A partir d'un seuil, l'homme du métier considère alors qu'un tel turbomoteur est en survitesse, une telle survitesse pouvant conduire à un emballement de la vitesse de rotation jusqu'à une dégradation du moteur, voire un éclatement du moteur.

Par suite, les giravions sont généralement munis de systèmes de sécurité pour tenter de limiter l'impact d'une telle survitesse sur l'intégrité d'un giravion.

Par suite, un système électronique de coupure peut être implémenté pour arrêter les turbomoteurs afin d'éviter l'apparition d'une survitesse.

Le constructeur d'un turbomoteur établit alors par exemple un seuil de vitesse de rotation de la turbine libre de ce turbomoteur. Lorsque ce seuil est atteint, l'unité de contrôle arrête le moteur. Dans cette configuration, le moteur n'est pas endommagé par le système de sécurité.

Le document FR 2962165 suggère de comparer uniquement le couple moteur transmis par une turbine libre à un seuil de couple.

Néanmoins, l'utilisation d'un unique seuil de surveillance de vitesse ou de couple peut induire des coupures intempestives du moteur, par exemple lorsque le giravion effectue une manoeuvre sévère. Dès lors, ce système de surveillance n'est parfois pas agencé sur un aéronef monomoteur.

Sur un giravion bimoteur, la coupure d'un moteur peut être inhibée en cas de coupure par survitesse de l'autre moteur pour éviter la coupure intempestive des deux moteurs. Après la coupure d'un premier moteur, l'arrêt en vol du deuxième moteur n'est alors plus autorisé.

Dans un tel cas de figure, le deuxième moteur ne peut cependant pas être arrêté en cas de survitesse. Une telle situation est improbable mais néanmoins possible. En conséquence, si le second moteur se trouve par la suite en condition de survitesse, ce deuxième moteur ne pourra pas être arrêté automatiquement puisque sa protection est inhibée. Le deuxième moteur risque donc d'être dans une situation de survitesse. En outre, il a dans ce cas été envisagé de protéger l'environnement extérieur immédiat de ce moteur avec une protection mécanique entourant le moteur formée par un anneau de rétention agencé autour de la turbine libre. Un tel type de protection est généralement connu et désigné par l'expression anglaise « blade shedding ».

Selon une variante, un pilote peut alors réarmer manuellement un système de protection électronique contre la survitesse du deuxième moteur pour éviter une telle situation.

Par ailleurs, l'arrière-plan technologique comporte un dispositif de protection qui met à l'arrêt un moteur en survitesse sous condition d'une comparaison entre une puissance mécanique requise par le giravion et un seuil de puissance prédéfini. La puissance mécanique requise par le giravion est calculée selon au moins la valeur courante ou anticipée du couple résistant d'un rotor principal du giravion.

Le document FR 2 967 213 décrit un procédé de commande pour piloter un système de sécurité de survitesse d'un aéronef comportant au moins deux moteurs. Ce procédé consiste à armer le système de sécurité de survitesse des moteurs, à surveiller le régime de rotation des moteurs, à détecter une survitesse sur l'un des moteurs, à couper le moteur en question en cas d'une telle détection et à inhiber le fonctionnement du système de sécurité de survitesse pour le ou les autres moteurs restant en fonctionnement. Les systèmes de sécurité de survitesse des moteurs restant en fonctionnement peuvent être réarmés en fonction d'un ou plusieurs paramètres de sécurité.

Le document FR 2 980 174 décrit un procédé de commande pour commander un système de sécurité de survitesse d'un aéronef comportant au moins deux moteurs. Selon ce procédé, un premier moteur est coupé lorsqu'un paramètre de surveillance de ce premier moteur dépasse un premier seuil et un deuxième moteur distinct de ce premier moteur est coupé lorsque le paramètre de surveillance de ce deuxième moteur dépasse un deuxième seuil, le deuxième seuil étant supérieur au premier seuil.

Notamment, le paramètre de surveillance est la vitesse de rotation de la turbine libre d'un moteur.

Le document FR3026438 décrit quant à lui un procédé de commande pour commander un système de sécurité de survitesse d'un giravion comportant au moins un moteur. Selon ce procédé, le moteur est coupé lorsqu'une dérivée par rapport au temps de la vitesse de rotation atteinte par un ensemble de puissance du moteur dépasse une dérivée limite.

Le document JP 2004 011459 se rapporte au domaine technique des bateaux se déplaçant à haute vitesse et à leur motorisation comportant une turbine à gaz. Par ailleurs, ce document décrit une protection contre les survitesses d'une turbine à gaz en mesurant une vitesse de rotation N d'un arbre de sortie au moyen d'un capteur de vitesse.

Un contrôleur de vitesse reçoit alors une information représentative de la vitesse N et peut commander une vanne pour couper une alimentation en carburant de la turbine à gaz si une survitesse est détectée.

Cette détection de survitesse est alors réalisée en comparant la dérivée de la vitesse de rotation dN/dt à une valeur de seuil positive.

Le document EP 3 000 986 A1 décrit quant à lui une détection d'une survitesse réalisée en fonction d'un couple mesuré, d'une vitesse de rotation N1 du générateur de gaz et d'une vitesse de rotation N2 de l'ensemble de puissance.

Le document EP 3 075 662A1 décrit un procédé pour arrêter un moteur en fonctionnement nominal et ne permet donc pas de détecter l'apparition d'une survitesse.

Le document US 6 321 525 B1 divulgue une détection d'une survitesse réalisée en fonction d'une vitesse de rotation de la turbine à gaz. La présente invention vise alors un procédé alternatif pour d'une part limiter les risques d'apparition d'une coupure intempestive d'un moteur de giravion et d'autre part garantir une coupure moteur lors d'un atterrissage dur d'un giravion sur le sol, sur un véhicule tel que notamment un bateau, un bâtiment ou toute piste d'atterrissage en général. Un tel atterrissage dur peut en effet anticiper une survitesse d'au moins un moteur équipant le giravion.

Par la suite, à des fins de simplification, le terme de « sol » pourra être utilisé pour désigner aussi bien le sol terrestre que le pont d'un navire, un hélipad agencé par exemple sur un bâtiment ou tout autre terrain ou piste sur lequel giravion est apte à atterrir.

L'invention concerne donc un procédé pour arrêter un moteur de giravion en survitesse, le giravion comportant au moins un moteur, le moteur comportant un générateur de gaz et un ensemble de puissance, l'ensemble de puissance comportant au moins une turbine de puissance mise en rotation par des gaz provenant du générateur de gaz, l'ensemble de puissance comportant au moins un arbre de puissance solidaire en rotation de la turbine de puissance, l'ensemble de puissance effectuant une rotation autour d'un axe longitudinal AX à une vitesse dite « vitesse de rotation N2 ».

Selon l'invention, un tel procédé est remarquable en ce que durant un vol, le procédé comporte des étapes consistant à :

• mesurer une valeur courante N2i de la vitesse de rotation N2 atteinte par l'ensemble de puissance pendant une période de temps prédéterminée T,
• déterminer une dérivée par rapport au temps de la valeur courante N2i de la vitesse de rotation dite « dérivée courante » $\left(\dfrac{dN2i}{dt}\right)$, et
• arrêter automatiquement le moteur lorsque la dérivée courante $\left(\dfrac{dN2i}{dt}\right)$ change de signe sur la période de temps prédéterminée T en passant d'une valeur strictement négative à une valeur strictement positive.

Autrement dit, le procédé pour arrêter un moteur de giravion en survitesse permet de détecter et d'anticiper la survenance d'une survitesse d'un arbre de puissance d'au moins un moteur du giravion.

En effet lors d'un atterrissage dur d'un giravion sur le sol, un impact entre au moins une pale d'un rotor principal participant au moins à la sustentation et le sol ou tout autre support, véhicule ou objet peut survenir. Dès lors, un tel impact va alors faire varier très fortement et très rapidement la valeur courante N2i de la vitesse de rotation N2 atteinte par l'ensemble de puissance.

Le procédé selon l'invention permet alors d'arrêter automatiquement le moteur lorsque la valeur courante N2i ralentit à cause de l'impact d'une pale avec le sol puis accélère sur la période de temps prédéterminée T. Dans ce cas, l'arrêt du ou des moteurs est commandé lorsqu'on détecte que la dérivée courante $\left(\dfrac{dN2i}{dt}\right)$ passe d'une valeur strictement négative à une valeur strictement positive. Plus précisément, la dérivée courante $\left(\dfrac{dN2i}{dt}\right)$ est une dérivée d'ordre 1 et passe d'une valeur fortement négative à une valeur fortement positive lors d'un atterrissage dur du giravion sur le sol.

Par ailleurs, l'étape d'arrêt permettant arrêter automatiquement le moteur peut être mise en oeuvre par exemple en coupant une alimentation en carburant du générateur de gaz. La quantité de carburant injectée dans le moteur peut être réduite, voire annulée.

Un tel procédé permet ainsi d'identifier un atterrissage dur d'un giravion et de commander l'arrêt automatique du moteur en survitesse mais de ne pas commander un arrêt du moteur dans d'autres cas de survitesse où uniquement la vitesse de rotation du moteur dépasserait une valeur de seuil.

Ce procédé se distingue donc des procédés permettant de commander un arrêt automatique du moteur en vol. Par exemple, en vol si la liaison mécanique liant le groupe motorisé et la boite de transmission de puissance est défaillante, alors une survitesse du moteur peut survenir. Ainsi, la dérivée courante $\left(\dfrac{dN2i}{dt}\right)$ devient très fortement positive. Elle n'a cependant pas été fortement négative préalablement à cette valeur très fortement positive et par conséquent le procédé conforme à l'invention permet d'éviter de commander un arrêt intempestif d'un moteur en vol.

En pratique, l'étape d'arrêt peut être mise en oeuvre lorsque d'une part la dérivée courante $\left(\dfrac{dN2i}{dt}\right)$ est inférieure ou égale à une première valeur de seuil prédéterminée S1 pendant une première période intermédiaire T1, puis d'autre part la dérivée courante $\left(\dfrac{dN2i}{dt}\right)$ est supérieure ou égale à une deuxième valeur de seuil prédéterminée S2 pendant une seconde période intermédiaire T2.

En d'autres termes, un tel procédé permet de contrôler l'arrêt du ou des moteurs en vérifiant que la dérivée courante $\left(\dfrac{dN2i}{dt}\right)$ change de signe et en comparant la dérivée courante $\left(\dfrac{dN2i}{dt}\right)$ avec les première et deuxième valeurs de seuil prédéterminées S1 et S2. Une telle comparaison peut en outre être mise en oeuvre constamment durant le vol d'un giravion ou bien alternativement lors d'une phase d'atterrissage ou bien encore en fonction de la hauteur du giravion par rapport au sol ou toute zone d'atterrissage en général.

Par ailleurs, la période de temps prédéterminée T est ainsi décomposée en deux périodes de temps successives, la première période intermédiaire T1 puis la seconde période intermédiaire T2.

De telles première et deuxième valeurs de seuil prédéterminées S1 et S2, première et seconde périodes intermédiaires T1 et T2 peuvent être définies de différentes manières et notamment par des simulations informatiques, par des essais en vol et par des tests. Les première et deuxième valeurs de seuil prédéterminées S1 et S2, première et seconde périodes intermédiaires T1 et T2 sont en outre particulières à chaque giravion et, pour un même giravion, peuvent varier en fonction de différents paramètres liés par exemple au type de mission du giravion et/ou à sa masse.

Par ailleurs, ces première et deuxième valeurs de seuil prédéterminées S1 et S2, première et seconde périodes intermédiaires T1 et T2 peuvent être des valeurs constantes stockées dans une mémoire embarquée dans le giravion.

Alternativement, les première et deuxième valeurs de seuil prédéterminées S1 et S2, première et seconde périodes intermédiaires T1 et T2 peuvent également être déterminées en vol et varier dans le temps selon des lois de calcul prédéterminées et enregistrées dans une mémoire embarquée sur le giravion.

Selon un exemple particulier de l'invention, la dérivée courante $\left(\dfrac{dN2i}{dt}\right)$ étant exprimée en pourcentage de la valeur courante N2i par seconde (%N2i.s$^{-1}$), la première valeur de seuil prédéterminée S1 peut être comprise entre -50%N2i.s$^{-1}$ et -100%N2i.s$^{-1}$.

En effet, une telle plage de valeurs de la première valeur de seuil prédéterminée S1 permet d'identifier un ralentissement de la valeur courante N2i causé par l'impact d'au moins une pale du rotor principal avec le sol.

Selon un autre aspect de l'invention, la dérivée courante $\left(\dfrac{dN2i}{dt}\right)$ étant exprimée en pourcentage de la valeur courante N2i par seconde (%N2i.s$^{-1}$), la deuxième valeur de seuil prédéterminée S2 peut être comprise entre +50%N2i.s$^{-1}$ et +200% N2i.s$^{-1}$.

Cette autre plage de valeurs de la seconde valeur de seuil prédéterminée S permet quant à elle d'identifier une accélération de la valeur courante N2i représentative par exemple de la rupture de la ou des pales et/ou d'une rupture d'un arbre de liaison entre le moteur et une boite de transmission principale de puissance. En effet, l'impact des pales avec le sol lors d'un atterrissage dur peut également engendrer la rupture d'autres éléments de transmission entre la turbine de puissance du moteur et des ensembles dynamiques du giravion.

Avantageusement, la première période intermédiaire T1 peut être inférieure à 1 seconde et peut être préférentiellement comprise entre 100 millisecondes et 800 millisecondes.

A l'instar de la plage de valeurs de la première valeur de seuil prédéterminée S1, cette plage de valeurs pour la première période intermédiaire T1 permet également de participer à l'identification du ralentissement de la valeur courante N2i causé par l'impact d'au moins une pale avec le sol.

En pratique, la seconde période intermédiaire T2 peut être inférieure à 1 seconde et peut être préférentiellement comprise entre 100 millisecondes et 800 millisecondes.

De même, cette plage de valeurs pour la seconde période intermédiaire T2 permet quant à elle de participer à l'identification de l'accélération de la valeur courante N2i représentative par exemple de la rupture de la ou des pales et/ou d'une rupture d'un arbre de liaison entre le moteur et une boite de transmission principale de puissance.

Eventuellement et de façon complémentaire, l'arrêt du moteur peut être conditionné par d'autres facteurs permettant de s'assurer que le moteur du giravion est bien dans une phase précédent un risque de survitesse.

Selon un premier exemple de réalisation de l'invention, le générateur de gaz comportant un ensemble tournant effectuant une rotation autour de l'axe longitudinal AX à une vitesse dite « vitesse de rotation N1 », le procédé peut comporter une étape consistant à mesurer une valeur courante N1i de la vitesse de rotation N1 atteinte par le générateur de gaz.

Dans ce cas, l'étape d'arrêt peut être conditionnée par une valeur courante N1i de la vitesse de rotation N1 supérieure à une troisième valeur de seuil prédéterminée S3.

Une telle troisième valeur de seuil prédéterminée S3 permet ainsi de garantir que le moteur est bien en fonctionnement dans une phase où le générateur de gaz fournit des gaz permettant d'entrainer en rotation la turbine libre. De cette manière, il est possible d'éviter une fausse détection d'un risque de survitesse causée par exemple par une phase de vol en autorotation. En effet, lors d'une telle phase de vol en autorotation la dérivée courante $\left(\dfrac{dN2i}{dt}\right)$ peut varier fortement alors que le moteur ne fournit que très peu de puissance aux ensembles dynamiques du giravion.

Selon un second exemple de réalisation de l'invention, le procédé peut comporter une étape consistant à mesurer une valeur courante Tqi d'un couple moteur Tq transmis au(x) arbre(s) de puissance.

Dans ce cas, l'étape d'arrêt peut être conditionnée par une valeur courante Tqi du couple moteur Tq supérieure à une quatrième valeur de seuil prédéterminée S4.

Selon ce second exemple, la quatrième valeur de seuil prédéterminée S4 permet également de garantir que le moteur fonctionne dans une phase où le générateur de gaz fournit des gaz permettant d'entrainer en rotation la turbine libre. Comme précédemment, il est alors envisagé d'éviter une identification d'un risque de survitesse causée par exemple par une phase de vol en autorotation.

Avantageusement, le procédé peut comporter une étape de traitement de la dérivée courante $\left(\dfrac{dN2i}{dt}\right)$, l'étape de traitement permettant de filtrer la dérivée courante $\left(\dfrac{dN2i}{dt}\right)$ et/ou de calculer une valeur moyenne de la dérivée courante $\left(\dfrac{dN2i}{dt}\right)$.

Une telle étape de traitement permet ainsi de rendre plus robuste la valeur filtrée ou moyennée de la dérivée courante $\left(\dfrac{dN2i}{dt}\right)$ quant aux phénomènes d'échantillonnage numérique.

La présente invention a aussi pour objet un système de sécurité en survitesse pour un moteur de giravion, le moteur comportant un générateur de gaz et un ensemble de puissance, l'ensemble de puissance comportant au moins une turbine de puissance mise en rotation par des gaz provenant du générateur de gaz, l'ensemble de puissance comportant au moins un arbre de puissance solidaire en rotation de la turbine de puissance, l'ensemble de puissance effectuant une rotation autour d'un axe longitudinal AX à une vitesse dite « vitesse de rotation N2 », le système de sécurité en survitesse comportant :

- un capteur de vitesse pour mesurer une valeur courante N2i de ladite vitesse de rotation N2 atteinte par l'ensemble de puissance pendant une période de temps prédéterminée T,
- un système de coupure pour arrêter le fonctionnement du moteur, et
- une unité de traitement reliée à la fois au capteur de vitesse et au système de coupure.

Selon l'invention, une telle unité de traitement est remarquable en ce qu'elle est configurée pour mettre en oeuvre le procédé précité en déterminant une dérivée par rapport au temps de la valeur courante N2i de la vitesse de rotation dite « dérivée courante » $\left(\dfrac{dN2i}{dt}\right)$ et en arrêtant automatiquement le moteur lorsque la dérivée courante $\left(\dfrac{dN2i}{dt}\right)$ change de signe sur la période de temps prédéterminée T en passant d'une valeur strictement négative à une valeur strictement positive.

Le capteur de vitesse peut comporter par exemple un capteur électromagnétique placé en face d'une roue phonique solidaire en rotation de l'organe rotatif dont on souhaite mesurer la vitesse de rotation.

Classiquement, une roue phonique peut être munie d'une zone périphérique comportant des dents réparties circonférentiellement. Le passage des dents de la roue phonique devant le capteur électromagnétique modifie le champ magnétique produit, et induit un courant alternatif dans une bobine du capteur électromagnétique dont la fréquence est proportionnelle à la vitesse de rotation.

Par ailleurs, le système de coupure peut comporter un doseur de carburant acheminant du carburant vers le générateur de gaz. Le système de coupure peut alors par exemple réduire au minimum, voire annuler, la quantité de carburant injectée dans le moteur par le doseur de carburant.

Ce système de coupure peut aussi comporter au moins une pompe acheminant du carburant vers le générateur de gaz. Dans ce cas, le système de coupure peut arrêter le moteur par exemple en coupant l'alimentation électrique de la pompe à carburant.

Par ailleurs, l'unité de traitement peut comporter un circuit logique ou équivalent, ou encore un moyen de calcul de type processeur ou équivalent qui exécute des instructions mémorisées dans une mémoire.

En particulier, l'unité de traitement peut être un FADEC du moteur. Pour mémoire, un FADEC représente l'unité de contrôle d'un turbomoteur, cette unité de contrôle étant dénommée « Full Authority Digital Engine Control » en langue anglaise.

Alternativement, l'unité de traitement peut aussi être agencée en parallèle du FADEC pour permettre de commander la coupure d'un moteur en survitesse même en cas de panne d'un FADEC.

Outre un système de sécurité en survitesse, l'invention vise aussi un giravion comportant un tel système.

Un tel giravion comporte alors au moins un moteur et un système de sécurité en survitesse pour ce ou ces moteurs.

Selon l'invention, un tel giravion est remarquable en ce que le système de sécurité en survitesse est tel que le système précité.

L'invention et ses avantages apparaîtront avec plus de détails dans le cadre de la description qui suit avec des exemples donnés à titre illustratif en référence aux figures annexées qui représentent :

la figure 1, une vue de côté d'un giravion conforme à l'invention,

la figure 2, un schéma de principe illustrant un système de sécurité en survitesse conforme à l'invention,

la figure 3, un diagramme représentatif des variations d'une dérivée courante $\left(\frac{dN2i}{dt}\right)$ en fonction du temps, conformément à l'invention,

la figure 4, un premier logigramme représentatif d'une première variante de procédé pour arrêter un moteur de giravion en survitesse, conformément à l'invention,

la figure 5, un deuxième logigramme représentatif d'une deuxième variante de procédé pour arrêter un moteur de giravion en survitesse, conformément à l'invention,

la figure 6, un troisième logigramme représentatif d'une troisième variante de procédé pour arrêter un moteur de giravion en survitesse, conformément à l'invention, et

la figure 7, un quatrième logigramme représentatif d'une quatrième variante de procédé pour arrêter un moteur de giravion en survitesse, conformément à l'invention.

Les éléments présents dans plusieurs figures distinctes sont affectés d'une seule et même référence.

Comme déjà évoqué, l'invention se rapporte à un procédé pour arrêter un moteur de giravion, un système de sécurité en survitesse et un giravion ainsi équipé.

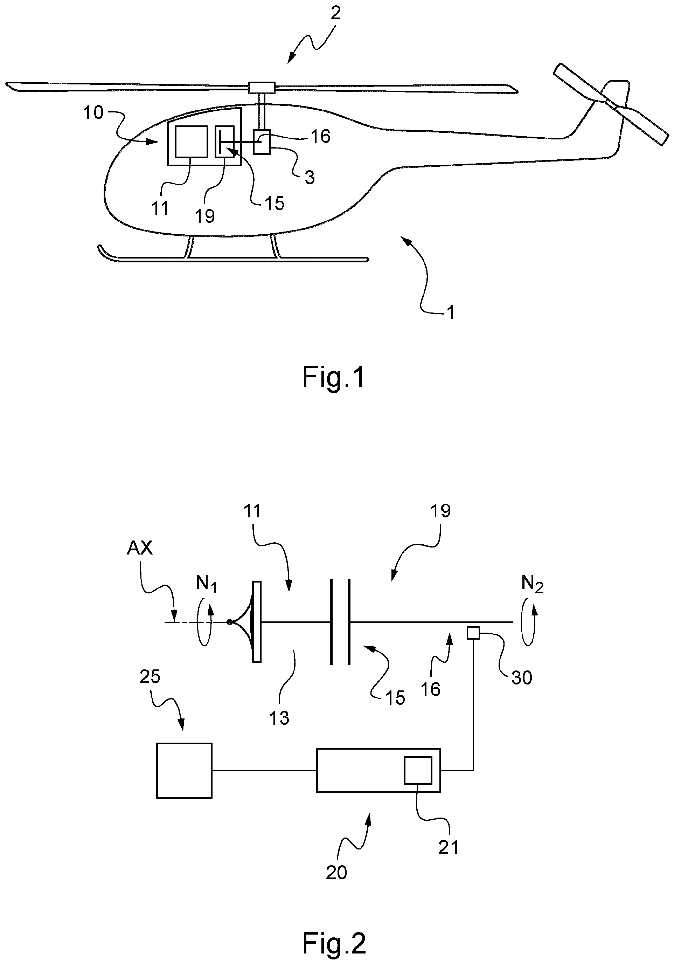

Tel que représenté à la figure 1, un tel giravion 1 comporte au moins un moteur 10 entrainant en rotation au moins un rotor 2 participant au moins à la sustentation du giravion 1 dans les airs. En outre, le ou les moteurs 10 sont reliés à une chaîne de transmission de puissance 3.

Un tel moteur 10 peut classiquement être un turbomoteur et comporter un générateur de gaz 11 et un ensemble de puissance 19.

Tel que représenté à la figure 2, l'ensemble de puissance 19 comporte au moins une turbine de puissance 15 mise en rotation par des gaz provenant du générateur de gaz 11 et au moins un arbre de puissance 16 solidaire en rotation de la turbine de puissance 15.

Un ensemble tournant 13 du générateur de gaz 11 peut notamment comporter un compresseur et une turbine de détente présentant un degré de mobilité en rotation autour d'un axe longitudinal AX et tournant sur eux-mêmes à une vitesse dite « vitesse de rotation N1 » par rapport à un carter du générateur de gaz 11.

De même, l'ensemble de puissance 19 peut également présenter un degré de mobilité en rotation autour de l'axe longitudinal AX par rapport à un châssis et tourner sur lui-même à une vitesse dite « vitesse de rotation N2 ».

En outre, un système de sécurité en survitesse 20 peut équiper le giravion 1. Ce système de sécurité en survitesse 20 comporte un capteur de vitesse 30 pour mesurer une valeur courante N2i de la vitesse de rotation N2 atteinte par l'ensemble de puissance 19 pendant une période de temps prédéterminée T.

Un tel capteur de vitesse 30 peut comporter par exemple un capteur électromagnétique placé en face d'une roue phonique solidaire en rotation de l'arbre de puissance 16.

Une telle roue phonique peut comporter des dents agencées au niveau d'une zone périphérique, ces dents étant régulièrement réparties circonférentiellement. Le passage des dents de la roue phonique devant le capteur de vitesse 30 peut notamment modifier un champ magnétique, et générer un courant alternatif dans une bobine du capteur de vitesse 30 dont la fréquence est proportionnelle à la vitesse de rotation de l'arbre de puissance 16.

Le système de sécurité en survitesse 20 comporte également un système de coupure 25 pour arrêter le fonctionnement du moteur 10 lorsque des conditions de détection sont remplies.

Un tel système de coupure 25 peut comporter un doseur de carburant acheminant du carburant vers le générateur de gaz 11.

Ce système de coupure 25 peut aussi comporter au moins une pompe acheminant du carburant vers le générateur de gaz 11.

Le système de sécurité en survitesse 20 comporte aussi une unité de traitement 21 reliée par voie filaire ou non filaire à la fois au capteur de vitesse 30 ainsi qu'au système de coupure 25.

Cette unité de traitement 21 peut comporter par exemple au moins un processeur et au moins une mémoire, au moins un circuit intégré, au moins un système programmable, au moins un circuit logique, ces exemples ne limitant pas la portée donnée à l'expression « unité de traitement ». Le terme processeur peut désigner aussi bien une unité centrale de traitement connue sous l'acronyme CPU, une unité graphique de traitement GPU, une unité digitale connue sous l'acronyme DSP, un microcontrôleur...

L'unité de traitement 21 permet de calculer une dérivée de la valeur courante N2i de la vitesse de rotation N2 dite « dérivée courante » $\left(\dfrac{dN2i}{dt}\right)$ pendant une période de temps prédéterminée T.

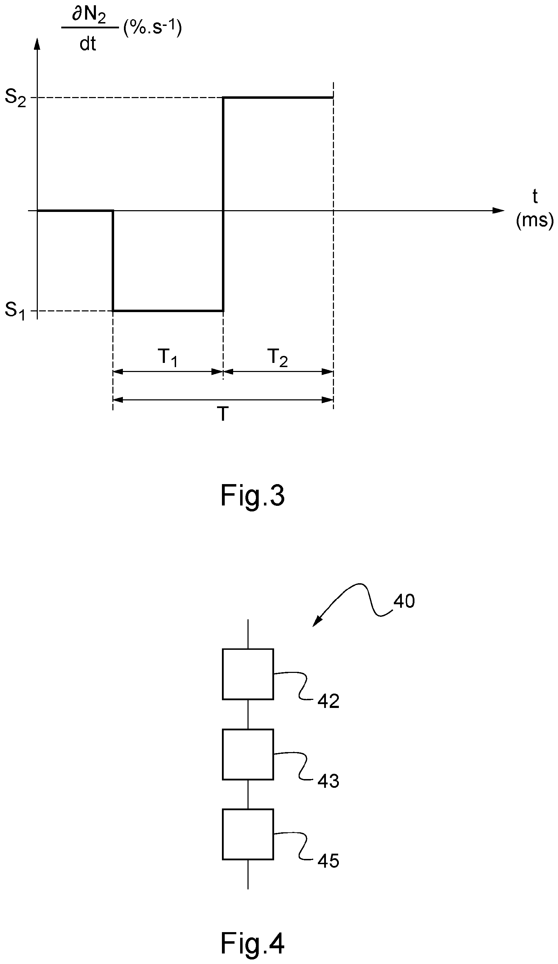

Telles que représentées à la figure 3, les valeurs dérivée courante $\left(\dfrac{dN2i}{dt}\right)$ peuvent varier en fonction du temps et par exemple osciller autour d'une valeur nulle.

L'unité de traitement 21 compare alors la dérivée courante $\left(\dfrac{dN2i}{dt}\right)$ avec des première et deuxième valeurs de seuil prédéterminées S1 et S2. De telles première et deuxième valeurs de seuil prédéterminées S1 et S2 peuvent être définies de différentes manières et notamment par des simulations informatiques, par des essais en vol et/ou par des tests. Les première et deuxième valeurs de seuil prédéterminées S1 et S2, première et seconde périodes intermédiaires T1 et T2 sont en outre particulières à chaque giravion et, pour un même giravion, peuvent varier en fonction de différents paramètres liés par exemple au type de mission du giravion et/ou de sa masse.

Par ailleurs, ces première et deuxième valeurs de seuil prédéterminées S1 et S2, première et seconde périodes intermédiaires T1 et T2 peuvent être des valeurs constantes stockées dans une mémoire embarquée dans le giravion.

Alternativement, les première et deuxième valeurs de seuil prédéterminées S1 et S2, première et seconde périodes intermédiaires T1 et T2 peuvent également être déterminées en vol et varier dans le temps selon des lois de calcul prédéterminées et enregistrées dans une mémoire embarquée sur le giravion.

Le système de coupure 25 pilote l'arrêt du ou des moteurs 10 lorsque la dérivée courante $\left(\dfrac{dN2i}{dt}\right)$ change de signe sur la période de temps prédéterminée T en passant d'une valeur strictement négative à une valeur strictement positive.

En pratique, le système de coupure 25 peut arrêter le ou les moteurs 10 lorsque d'une part la dérivée courante $\left(\dfrac{dN2i}{dt}\right)$ est inférieure ou égale à la première valeur de seuil prédéterminée S1 pendant une première période intermédiaire T1, puis d'autre part la dérivée courante $\left(\dfrac{dN2i}{dt}\right)$ est supérieure ou égale à une deuxième valeur de seuil prédéterminée S2 pendant une seconde période intermédiaire T2.

Par exemple, la première valeur de seuil prédéterminée S1 est comprise entre -50%N2i.s$^{-1}$ et -100%N2i.s$^{-1}$ et la deuxième valeur de seuil prédéterminée S2 est comprise entre +50%N2i.s$^{-1}$ et +200%N2i.s$^{-1}$.

La première période intermédiaire T1 et la deuxième période intermédiaire T2 sont respectivement inférieures à 1 seconde et sont préférentiellement comprises entre 100 millisecondes et 800 millisecondes. Additionnées entre elles, la première période intermédiaire T1 et la deuxième période intermédiaire T2 sont alors égales à la période de temps prédéterminée T.

Telle que représentée aux figures 4 à 7, l'invention se rapporte également à un procédé pour arrêter un moteur 10 de giravion 1 en survitesse.

Ainsi, telle que représentée à la figure 4, une première variante de procédé 40 pour arrêter un moteur 10 de giravion 1 en survitesse comporte une étape de mesure 42 pour mesurer la valeur courante N2i de la vitesse de rotation N2 atteinte par l'ensemble de puissance 19 pendant la période de temps prédéterminée T.

Le procédé 40 comporte ensuite une étape de détermination 43 de la dérivée courante $\left(\frac{dN2i}{dt}\right)$.

Enfin, le procédé 40 met en oeuvre une étape d'arrêt 45 pour arrêter automatiquement le moteur 10 lorsque la dérivée courante $\left(\frac{dN2i}{dt}\right)$ change de signe sur la période de temps prédéterminée T en passant d'une valeur strictement négative à une valeur strictement positive.

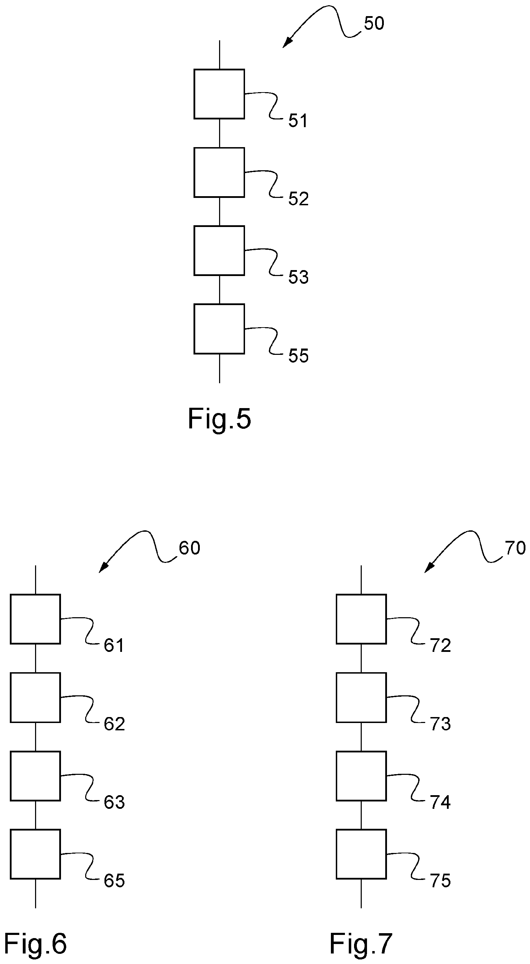

Selon une deuxième variante du procédé 50 représentée à la figure 5, l'arrêt du moteur 10 peut être conditionné par au moins un autre paramètre. Ainsi, le procédé 50 peut comporter une étape de mesure 51 d'une valeur courante N1i de la vitesse de rotation N1 atteinte par le générateur de gaz 11.

Le procédé 50 met ensuite une étape de mesure 52 pour mesurer la valeur courante N2i de la vitesse de rotation N2 atteinte par l'ensemble de puissance 19 pendant la période de temps prédéterminée T, une étape de détermination 53 de la dérivée courante $\left(\frac{dN2i}{dt}\right)$ et une étape d'arrêt 55 pour arrêter automatiquement le moteur 10.

Selon cette deuxième variante de procédé 50, l'étape d'arrêt 55 permet alors d'arrêter automatiquement le moteur 10 lorsque d'une part la valeur courante N1i de la vitesse de rotation N1 est supérieure à une troisième valeur de seuil prédéterminée S3 et d'autre part ensuite la dérivée courante $\left(\frac{dN2i}{dt}\right)$ change de signe sur la période de temps prédéterminée T en passant d'une valeur strictement négative à une valeur strictement positive.

Selon une troisième variante du procédé 60 représentée à la figure 6, on peut alternativement mettre en oeuvre une étape de mesure 61 pour mesurer une valeur courante Tqi d'un couple moteur Tq transmis à l'arbre de puissance 16.

Comme dans les deux variantes précédentes, le procédé 60 met ensuite en oeuvre une étape de mesure 62 pour mesurer la valeur courante N2i de la vitesse de rotation N2 atteinte par l'ensemble de puissance 19 pendant la période de temps prédéterminée T, une étape de détermination 63 de la dérivée courante $\left(\frac{dN2i}{dt}\right)$ et une étape d'arrêt 65 pour arrêter automatiquement le moteur 10.

Selon cette troisième variante de procédé 60, l'étape d'arrêt 65 permet alors d'arrêter automatiquement le moteur 10 lorsque d'une part la valeur courante Tqi du couple moteur Tq est supérieure à une quatrième valeur de seuil prédéterminée S4 et d'autre part ensuite la dérivée courante $\left(\frac{dN2i}{dt}\right)$ change de signe sur la période de temps prédéterminée T en passant d'une valeur strictement négative à une valeur strictement positive.

Selon une quatrième variante du procédé 70 représentée à la figure 7, on met en oeuvre une étape de mesure 72 pour mesurer la valeur courante N2i de la vitesse de rotation N2 atteinte par l'ensemble de puissance 19 pendant la période de temps prédéterminée T, une étape de détermination 73 de la dérivée courante $\left(\frac{dN2i}{dt}\right)$, une étape de traitement 74 de cette dérivée courante $\left(\frac{dN2i}{dt}\right)$ pour filtrer la dérivée courante $\left(\frac{dN2i}{dt}\right)$ et/ou pour calculer une valeur moyenne de la dérivée courante $\left(\frac{dN2i}{dt}\right)$ et une étape d'arrêt 75 pour arrêter automatiquement le moteur 10.

Cette étape d'arrêt 75 permet alors d'arrêter automatiquement le moteur 10 lorsque la dérivée courante $\left(\frac{dN2i}{dt}\right)$, filtrée et/ou moyennée, change de signe sur la période de temps prédéterminée T en passant d'une valeur strictement négative à une valeur strictement positive.

Bien entendu, en complément d'un changement de signe, la dérivée courante $\left(\frac{dN2i}{dt}\right)$, filtrée et/ou moyennée, peut permettre d'arrêter le ou les moteurs 10 lorsque d'une part cette dérivée courante $\left(\frac{dN2i}{dt}\right)$ filtrée et/ou moyennée est inférieure ou égale à la première valeur de seuil prédéterminée S1 pendant une première période intermédiaire T1, puis d'autre part cette dérivée courante $\left(\frac{dN2i}{dt}\right)$ filtrée et/ou moyennée est supérieure ou égale à une deuxième valeur de seuil prédéterminée S2 pendant une seconde période intermédiaire T2.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé (40, 50, 60, 70) pour arrêter un moteur (10) de giravion (1) en survitesse, ledit giravion (1) comportant au moins un moteur (10), ledit moteur (10) comportant un générateur de gaz (11) et un ensemble de puissance (19), ledit ensemble de puissance (19) comportant au moins une turbine de puissance (15) mise en rotation par des gaz provenant dudit générateur de gaz (11), ledit ensemble de puissance (19) comportant au moins un arbre de puissance (16) solidaire en rotation de ladite turbine de puissance (15), ledit ensemble de puissance (19) effectuant une rotation autour d'un axe longitudinal (AX) à une vitesse dite « vitesse de rotation (N2) »,
ledit procédé (40, 50, 60, 70) se **caractérise en ce que** durant un vol, ledit procédé (40, 50, 60, 70) comporte des étapes consistant à :

    • mesurer (42, 52, 62, 72) une valeur courante (N2i) de ladite vitesse de rotation (N2) atteinte par ledit ensemble de puissance (19) pendant une période de temps prédéterminée T,
    • déterminer (43, 53, 63, 73) une dérivée par rapport au temps de ladite valeur courante (N2i) de ladite vitesse de rotation (N2) dite « dérivée courante » $\left(\dfrac{dN2i}{dt}\right)$ , et
    • arrêter (45, 55, 65, 75) automatiquement ledit moteur (10) lorsque ladite dérivée courante $\left(\dfrac{dN2i}{dt}\right)$ change de signe sur ladite période de temps prédéterminée T en passant d'une valeur strictement négative à une valeur strictement positive.

2. Procédé selon la revendication 1,
**caractérisé en ce que** ladite étape d'arrêt (45, 55, 65, 75) est mise en oeuvre lorsque d'une part ladite dérivée courante $\left(\dfrac{dN2i}{dt}\right)$ est inférieure ou égale à une première valeur de seuil prédéterminée S1 pendant une première période intermédiaire T1 puis d'autre part ladite dérivée courante $\left(\dfrac{dN2i}{dt}\right)$ est supérieure ou égale à une deuxième valeur de seuil prédéterminée S2 pendant une seconde période intermédiaire T2.

3. Procédé selon la revendication 2,
**caractérisé en ce que**, ladite dérivée courante $\left(\dfrac{dN2i}{dt}\right)$ étant exprimée en pourcentage de ladite valeur courante N2i par seconde (%N2i.s$^{-1}$), ladite première valeur de seuil prédéterminée S1 est comprise entre -50%N2i.s$^{-1}$ et -100%N2i.s$^{-1}$.

4. Procédé selon l'une quelconque des revendications 2 à 3,

**caractérisé en ce que**, ladite dérivée courante $\left(\dfrac{dN2i}{dt}\right)$ étant exprimée en pourcentage de ladite valeur courante N2i par seconde (%N2i.s$^{-1}$), ladite deuxième valeur de seuil prédéterminée S2 est comprise entre +50%N2i.s$^{-1}$ et +200%N2i.s$^{-1}$.

5. Procédé selon l'une quelconque des revendications 2 à 4,
**caractérisé en ce que** ladite première période intermédiaire T1 est inférieure à 1 seconde et est préférentiellement comprise entre 100 millisecondes et 800 millisecondes.

6. Procédé selon l'une quelconque des revendications 2 à 5,
**caractérisé en ce que** ladite seconde période intermédiaire T2 est inférieure à 1 seconde et est préférentiellement comprise entre 100 millisecondes et 800 millisecondes.

7. Procédé selon l'une quelconque des revendications 1 à 6,
**caractérisé en ce que**, ledit générateur de gaz (11) comportant un ensemble tournant effectuant une rotation autour dudit axe longitudinal (AX) à une vitesse dite « vitesse de rotation (N1) », ledit procédé (50) comporte une étape consistant à mesurer (51) une valeur courante (N1i) de ladite vitesse de rotation (N1) atteinte par ledit générateur de gaz (11).

8. Procédé selon la revendication 7,
**caractérisé en ce que** ladite étape d'arrêt (55) est conditionnée par une valeur courante (N1i) de ladite vitesse de rotation (N1) supérieure à une troisième valeur de seuil prédéterminée (S3).

9. Procédé selon l'une quelconque des revendications 1 à 6,
**caractérisé en ce que** ledit procédé (60) comporte une étape consistant à mesurer (61) une valeur courante (Tqi) d'un couple moteur (Tq) transmis audit au moins un arbre de puissance (16).

10. Procédé selon la revendication 9,
**caractérisé en ce que** ladite étape d'arrêt (65) est conditionnée par une valeur courante (Tqi) dudit couple moteur (Tq) supérieure à une quatrième valeur de seuil prédéterminée (S4).

11. Procédé selon l'une quelconque des revendications 1 à 10,
**caractérisé en ce que** ledit procédé (70) comporte une étape de traitement (74) de ladite dérivée courante $\left(\dfrac{dN2i}{dt}\right)$ , ladite étape de traitement (74) permettant de filtrer ladite dérivée courante $\left(\frac{dN2i}{dt}\right)$ et/ou de calculer une valeur moyenne de ladite dérivée courante $\left(\frac{dN2i}{dt}\right)$.

12. Système de sécurité en survitesse (20) pour un moteur (10) de giravion (1), ledit moteur (10) comportant un générateur de gaz (11) et un ensemble de puissance (19), ledit ensemble de puissance (19) comportant au moins une turbine de puissance (15) mise en rotation par des gaz provenant dudit générateur de gaz (11), ledit ensemble de puissance (19) comportant au moins un arbre de puissance (16) solidaire en rotation de la turbine de puissance (15), ledit ensemble de puissance (19) effectuant une rotation autour d'un axe longitudinal (AX) à une vitesse dite « vitesse de rotation (N2) », ledit système de sécurité en survitesse (20) comportant :

> • un capteur de vitesse (30) pour mesurer une valeur courante (N2i) de ladite vitesse de rotation (N2) atteinte par ledit ensemble de puissance (19) pendant une période de temps prédéterminée T,
> • un système de coupure (25) pour arrêter le fonctionnement dudit moteur (10), et
> • une unité de traitement (21) reliée à la fois audit capteur de vitesse (30) et audit système de coupure (25),
>
> **caractérisé en ce que** ladite unité de traitement (21) est configurée pour mettre en oeuvre le procédé (40, 50, 60, 70) selon l'une quelconque des revendications 1 à 11.

13. Giravion (1) comportant au moins un moteur (10) et un système de sécurité en survitesse (20) pour ledit au moins un moteur (10), **caractérisé en ce que** ledit système de sécurité (20) est selon la revendication 12.

**Patentansprüche**

1. Verfahren (40, 50, 60, 70) zum Anhalten eines Triebwerks (10) eines Drehflügelflugzeugs (1) bei Übergeschwindigkeit, wobei das Drehflügelflugzeug (1) mindestens ein Triebwerk (10) umfasst, wobei das Triebwerk (10) einen Gasgenerator (11) und eine Leistungsbaugruppe (19) umfasst, wobei die Leistungsbaugruppe (19) mindestens eine Leistungsturbine (15) umfasst, die durch von dem Gasgenerator (11) kommendes Gas in Drehung versetzt wird, wobei die Leistungsbaugruppe (19) mindestens eine Leistungswelle (16) umfasst, die drehfest mit der Leistungsturbine (15) verbunden ist, und die Leistungsbaugruppe (19) eine Drehung um eine Längsachse (AX) mit einer als "Drehgeschwindigkeit (N2)" bezeichneten Geschwindigkeit ausführt, wobei das Verfahren (40, 50, 60, 70) **dadurch gekennzeichnet ist, dass** während eines Fluges das Verfahren (40, 50, 60, 70) die folgenden Schritte umfasst:

> - Messen (42, 52, 62, 72) eines aktuellen Wertes (N2i) der von der Leistungsbaugruppe (19) während einer vorgegebenen Zeitspanne T erreichten Drehgeschwindigkeit (N2),
> - Bestimmen (43, 53, 63, 73) einer als "aktuelle Ableitung" $\left(\frac{dN2i}{dt}\right)$ bezeichnet zeitlichen Ableitung des aktuellen Werts (N2i) der Drehgeschwindigkeit (N2), und
> - automatisches Anhalten (45, 55, 65, 75) des Triebwerks (10), wenn die aktuelle Ableitung $\left(\frac{dN2i}{dt}\right)$ während der vorgegebenen Zeitdauer T ihr Vorzeichen von einem strikt negativen Wert auf einem strikt positiven Wert ändert.

2. Verfahren nach Awnspruch 1, **dadurch gekennzeichnet, dass** der Schritt des Anhaltens (45, 55, 65, 75) durchgeführt wird, wenn einerseits die aktuelle Ableitung $\left(\frac{dN2i}{dt}\right)$ während einer ersten Zwischenzeitspanne T1 kleiner oder gleich einem ersten vorgegebenen Schwellenwert S1 ist und dann andererseits die aktuelle Ableitung $\left(\frac{dN2i}{dt}\right)$ während einer zweiten Zwischenzeitspanne T2 größer oder gleich einem zweiten vorgegebenen Schwellenwert S2 ist.

3. Verfahren nach Anspruch 2, **dadurch gekennzeichnet, dass**, wenn die aktuelle Ableitung $\left(\frac{dN2i}{dt}\right)$ als Prozentsatz des aktuellen Werts N2i pro Sekunde ($\%N2i.s^{-1}$) angegeben wird, der erste vorgegebene Schwellenwert S1 zwischen $-50\%N2i.s^{-1}$ und $-100\%N2i.s^{-1}$ liegt.

4. Verfahren nach einem der Ansprüche 2 bis 3, **dadurch gekennzeichnet, dass**, wenn die aktuelle Ableitung als Prozentsatz des aktuellen Werts N2i pro Sekunde ($\%N2i.s{-1}$) angegeben wird, der zweite vorgegebene Schwellenwert S2 zwischen $+50\%N2i.s^{-1}$ und $+200\%N2i.s^{-1}$ liegt.

5. Verfahren nach einem der Ansprüche 2 bis 4,

**dadurch gekennzeichnet, dass** die erste Zwischenzeitspanne T1 weniger als 1 Sekunde beträgt und vorzugsweise zwischen 100 Millisekunden und 800 Millisekunden liegt.

6. Verfahren nach einem der Ansprüche 2 bis 5, **dadurch gekennzeichnet, dass** die zweite Zwischenzeitspanne T2 weniger als 1 Sekunde beträgt und vorzugsweise zwischen 100 Millisekunden und 800 Millisekunden liegt.

7. Verfahren nach einem der Ansprüche 1 bis 6, **dadurch gekennzeichnet, dass** der Gasgenerator (11) eine rotierende Baugruppe umfasst, die eine Drehung um die Längsachse (AX) mit einer als "Rotationsgeschwindigkeit (N1)" bezeichneten Geschwindigkeit ausführt, und dass das Verfahren (50) einen Schritt umfasst, der darin besteht, einen aktuellen Wert (N1i) der vom Gasgenerator (11) erreichten Drehgeschwindigkeit (N1) zu messen (51).

8. Verfahren nach Anspruch 7, **dadurch gekennzeichnet, dass** der Schritt des Anhaltens (55) durch einen aktuellen Wert (N1i) der Drehgeschwindigkeit (N1) bedingt ist, der größer als ein dritter vorgegebener Schwellenwert (S3) ist.

9. Verfahren nach einem der Ansprüche 1 bis 6, **dadurch gekennzeichnet, dass** das Verfahren (60) einen Schritt des Messens (61) eines aktuellen Werts (Tqi) eines auf die mindestens eine Leistungswelle (16) übertragenen Triebwerkdrehmoments (Tq) umfasst.

10. Verfahren nach Anspruch 9, **dadurch gekennzeichnet, dass** der Schritt des Anhaltens (65) durch einen aktuellen Wert (Tqi) des Triebwerkdrehmoments (Tq) bedingt ist, der größer als ein vierter vorbestimmter Schwellenwert (S4) ist.

11. Verfahren nach einem der Ansprüche 1 bis 10, **dadurch gekennzeichnet, dass** das Verfahren (70) einen Schritt des Verarbeitens (74) der aktuellen Ableitung $\left(\frac{dN2i}{dt}\right)$ umfasst, wobei der Schritt des Verarbeitens (74) das Filtern der aktuellen Ableitung $\left(\frac{dN2i}{dt}\right)$ und/oder das Berechnen eines Mittelwerts der aktuellen Ableitung $\left(\frac{dN2i}{dt}\right)$ ermöglicht.

12. Überdrehzahl-Sicherheitssystem (20) für ein Triebwerk (10) eines Drehflügelflugzeugs (1), wobei das Triebwerk (10) einen Gasgenerator (11) und eine Leistungsbaugruppe (19) umfasst, wobei die Leistungsbaugruppe (19) mindestens eine Leistungsturbine (15) umfasst, die durch Gas aus dem Gasgenerator (11) in Drehung versetzt wird, wobei die Leistungseinheit (19) mindestens eine Leistungswelle (16) umfasst, die drehfest mit der Leistungsturbine (15) verbunden ist, und die Leistungseinheit (19) eine Drehung um eine Längsachse (AX) mit einer als "Drehgeschwindigkeit (N2)" bezeichneten Geschwindigkeit ausführt, wobei das Überdrehzahl-Sicherheitssystem (20) umfasst:

- einen Geschwindigkeitssensor (30) zum Messen eines aktuellen Werts (N2i) der Drehgeschwindigkeit (N2), die von der Leistungsbaugruppe (19) während einer vorgegebenen Zeitspanne T erreicht wird,
- ein Abschaltsystem (25), um den Betrieb des Triebwerks (10) anzuhalten, und
- eine Verarbeitungseinheit (21), die sowohl mit dem Drehzahlsensor (30) als auch mit dem Abschaltsystem (25) verbunden ist,

**dadurch gekennzeichnet, dass** die Verarbeitungseinheit (21) konfiguriert ist, um das Verfahren (40, 50, 60, 70) nach einem der Ansprüche 1 bis 11 auszuführen.

13. Drehflügelflugzeug (1) mit mindestens einem Triebwerk (10) und einem Überdrehzahl-Sicherheitssystem (20) für das mindestens eine Triebwerk (10), **dadurch gekennzeichnet, dass** das Sicherheitssystem (20) gemäß Anspruch 12 ist.

**Claims**

1. Method (40, 50, 60, 70) for stopping an engine (10) of a rotorcraft (1) in overspeed, said rotorcraft (1) comprising at least one engine (10), said engine (10) comprising a gas generator (11) and a power assembly (19), said power assembly (19) comprising at least one power turbine (15) rotated by gases coming from said gas generator (11), said power assembly (19) comprising at least one power shaft (16) rotationally conjoint with said power turbine (15), said power assembly (19) rotating about a longitudinal axis (AX) at a speed referred to as the "rotational speed (N2)",
said method (40, 50, 60, 70) is **characterized in that** during a flight, said method (40, 50, 60, 70) comprises steps involving:

• measuring (42, 52, 62, 72) a current value (N2i) of said rotational speed (N2) reached by said power assembly (19) over a predetermined period of time T,

• determining (43, 53, 63, 73) a time derivative of said current value (N2i) of said rotational speed (N2) referred to as the "current derivative"

$$\left(\frac{dN2i}{dt}\right)$$

, and

• automatically stopping (45, 55, 65, 75) said engine (10) when said current derivative

$$\left(\frac{dN2i}{dt}\right)$$

changes sign over said predetermined period of time T, moving from a strictly negative value to a strictly positive value.

2. Method according to Claim 1,
   **characterized in that** said stopping step (45, 55, 65, 75) is implemented when, on the one hand, said

   $$\left(\frac{dN2i}{dt}\right)$$

   current derivative is lower than, or equal to, a first predetermined threshold value S1 over a first intermediate period T1 then, on the other hand,

   $$\left(\frac{dN2i}{dt}\right)$$

   said current derivative is greater than, or equal to, a second predetermined threshold value S2 over a second intermediate period of time T2.

3. Method according to Claim 2,
   **characterized in that** said current derivative

   $$\left(\frac{dN2i}{dt}\right)$$

   is expressed as a percentage of said current value N2i per second (%N2i.s$^{-1}$), said first predetermined threshold value S1 falling between -50%N2i.s$^{-1}$ and -100%N2i.s$^{-1}$.

4. Method according to any one of Claims 2 to 3,
   **characterized in that** said current derivative

   $$\left(\frac{dN2i}{dt}\right)$$

   is expressed as a percentage of said current value N2i per second (%N2i.s$^{-1}$), said second predetermined threshold value S2 falling between +50%N2i.s$^{-1}$ and +200%N2i.s$^{-1}$.

5. Method according to any one of Claims 2 to 4,
   **characterized in that** said first intermediate period T1 is lower than 1 second and preferably falls between 100 milliseconds and 800 milliseconds.

6. Method according to any one of Claims 2 to 5,
   **characterized in that** said second intermediate period T2 is lower than 1 second and preferably falls between 100 milliseconds and 800 milliseconds.

7. Method according to any one of Claims 1 to 6,
   **characterized in that** said gas generator (11) comprising a rotating assembly that rotating about said longitudinal axis (AX) at a speed referred to as the "rotational speed (N1)", said method (50) comprises a step involving measuring (51) a current value (N1i) of said rotational speed (N1) reached by said gas generator (11).

8. Method according to Claim 7,
   **characterized in that** said stopping step (55) is conditional upon a current value (N1i) of said rotational speed (N1) being greater than a third predetermined threshold value (S3).

9. Method according to any one of Claims 1 to 6,
   **characterized in that** said method (60) comprises a step involving measuring (61) a current value (Tqi) of an engine torque (Tq) transmitted to said at least one power shaft (16).

10. Method according to Claim 9,
    **characterized in that** said stopping step (65) is conditional upon a current value (Tqi) of said engine shaft (Tq) being greater than a fourth predetermined threshold value (S4).

11. Method according to any one of Claims 1 to 10,
    **characterized in that** said method (70) comprises a processing step (74) of said current derivative

    $$\left(\frac{dN2i}{dt}\right)$$

    , said processing step (74) allowing said current derivative

    $$\left(\frac{dN2i}{dt}\right)$$

    to be de filtered and/or a mean value of said current derivative

    $$\left(\frac{dN2i}{dt}\right)$$

    to be calculated.

12. Overspeed safety system (20) for an engine (10) of a rotorcraft (1), said engine (10) comprising a gas generator (11) and a power assembly (19), said power assembly (19) comprising at least one power turbine (15) rotated by gases coming from said gas generator (11), said power assembly (19) comprising at least one power shaft (16) rotationally conjoint with said power turbine (15), said power assembly (19) rotating about a longitudinal axis (AX) at a speed referred to as the "rotational speed (N2)", said overspeed safety system (20) comprising:

    • a speed sensor (30) for measuring a current value (N2i) of said speed of rotation (N2) reached by said power assembly (19) over a predetermined period of time T,
    • a shutdown system (25) for stopping the running of said engine (10), and
    • a processing unit (21) connected both to said speed sensor (30) and to said shutdown system (25),

**characterized in that** said processing unit (21) is configured to implement the method (40, 50, 60, 70) according to any one of Claims 1 to 11.

13. Rotorcraft (1) comprising at least one engine (10) and an overspeed safety system (20) for said at least one engine (10),
**characterized in that** said safety system (20) is according to Claim 12.

Fig.1

Fig.2

$$\frac{\partial N_2}{dt}\ (\%.s^{-1})$$

$S_2$

$S_1$

$T_1$

$T_2$

$T$

t
(ms)

## Fig.3

40

42

43

45

## Fig.4

Fig.5

Fig.6

Fig.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2962165
- FR 2967213
- FR 2980174
- FR 3026438
- JP 2004011459 A
- EP 3000986 A1
- EP 3075662 A1
- US 6321525 B1